# EUROPÄISCHE PATENTSCHRIFT

(11) **EP 2 438 797 B1**
(45) Veröffentlichungstag und Bekanntmachung des Hinweises auf die Patenterteilung: **25.02.2015**
(21) Anmeldenummer: 10725003.7
(22) Anmeldetag: 14.05.2010
(51) Int. Cl.: H05B 37/02, H05B 33/08

(54) **OPTISCHES BELEUCHTUNGSGERÄT UND OPTISCHES AUFZEICHNUNGSGERÄT**
OPTICAL LIGHTING DEVICE AND OPTICAL RECORDING DEVICE
APPAREIL D'ÉCLAIRAGE OPTIQUE ET APPAREIL D'ENREGISTREMENT OPTIQUE

(30) Priorität: 05.06.2009 DE 102009024069
(43) Veröffentlichungstag der Anmeldung: 11.04.2012
(73) Patentinhaber: OSRAM Opto Semiconductors GmbH, 93055 Regensburg (DE)
(72) Erfinder: BRANDL, Michael, 93098 Mintraching (DE); WILM, Alexander, 93059 Regensburg (SG)
(74) Vertreter: Much, Florian
(86) Internationale Anmeldenummer: PCT/DE2010/000539
(87) Internationale Veröffentlichungsnummer: WO 2010/139294

(56) Entgegenhaltungen:
- WO-A1-2006/105649
- WO-A1-2008/041153
- DE-A1-102005 022 832

## Beschreibung

Die vorliegende Erfindung betrifft ein optisches Beleuchtungsgerät mit einem Strahlungsdetektor, einer ersten Lichtquelle und einer zweiten Lichtquelle. Das optische Beleuchtungsgerät eignet sich insbesondere für eine Verwendung in einem oder mit einem optischen Aufzeichnungsgerät.

Die Druckschrift DE 10 2005 022 832 A1 betrifft einen Scheinwerfer für Film- und Videoaufnahmen.

In der Druckschrift WO 2006/105649 A1 ist eine Lichtquelle für weißes Licht mit einstellbarer Farbtemperatur beschrieben.

Eine elektrische Versorgungseinrichtung für Leuchtdioden findet sich in der Druckschrift WO 2008/041153 A1.

Aus der Druckschrift DE 10 2007 042 573 A1 ist ein optisches Beleuchtungsgerät bekannt, das einen Detektor, eine Lichtquelle und ein Steuermittel aufweist. Das Steuermittel ist dazu geeignet, eine spektrale Eigenschaft der von der Lichtquelle emittierten Strahlung in Abhängigkeit von der ermittelten spektralen Eigenschaft des Umgebungslichts einzustellen.

Bei derartigen Beleuchtungsgeräten wird die spektrale Eigenschaft des von der Lichtquelle emittierten Lichts an eine ermittelte spektrale Eigenschaft des Umgebungslichts angepasst. Insbesondere wird die Beleuchtung des Beleuchtungsgeräts möglichst ähnlich der Umgebungsbeleuchtung eingestellt. Dadurch ist jedoch die Effizienz bezüglich der Ausleuchtung des Strahlungsdetektors mittels der Lichtquelle eingeschränkt.

Der Erfindung liegt die Aufgabe zugrunde, ein verbessertes optisches Beleuchtungsgerät anzugeben, das sich insbesondere durch eine effiziente Ausleuchtung des Strahlungsdetektors auszeichnet. Weiter ist es Aufgabe der Erfindung, ein optisches Aufzeichnungsgerät mit einem derartigen optischen Beleuchtungsgerät anzugeben.

Diese Aufgaben werden unter anderem durch ein optisches Beleuchtungsgerät mit den Merkmalen des Patentanspruchs 1 und durch ein optisches Aufzeichnungsgerät mit den Merkmalen des Anspruchs 10 gelöst. Vorteilhafte Ausführungsformen und bevorzugte Weiterbildungen des Beleuchtungsgeräts und des Aufzeichnungsgeräts sind Gegenstand der abhängigen Ansprüche.

Erfindungsgemäß ist ein optisches Beleuchtungsgerät vorgesehen, das einen Strahlungsdetektor, eine erste Lichtquelle und eine zweite Lichtquelle aufweist. Der Strahlungsdetektor umfasst einen Halbleiterchip und einen optischen Filter, und weist eine spektrale Empfindlichkeitsverteilung auf. Die erste Lichtquelle ist zur Erzeugung von weißer Strahlung geeignet. Die zweite Lichtquelle ist zur Erzeugung von monochromer Strahlung im sichtbaren Spektralbereich geeignet, wobei sich die von der ersten Lichtquelle emittierte Strahlung und die von der zweiten Lichtquelle emittierte Strahlung zu einer Mischstrahlung überlagern, die ein Wellenlängenspektrum aufweist. Das Wellenlängenspektrum der Mischstrahlung ist an die spektrale Empfindlichkeitsverteilung des Strahlungsdetektors angepasst.

Dabei ist der Verlauf des Wellenlängenspektrums der Mischstrahlung an den Verlauf der spektralen Empfindlichkeitsverteilung des Strahlungsdetektors angepasst.

Es ist die erste Lichtquelle zur Erzeugung von weißer Strahlung geeignet, wobei die von der ersten Lichtquelle emittierte Strahlung ein kontinuierliches oder quasi-kontinuierliches Spektrum im Wellenlängenbereich zwischen einschließlich 450 nm und einschließlich 700 nm aufweist. Die erste Lichtquelle emittiert somit bevorzugt Strahlung aufweisend ein kontinuierliches Spektrum im sichtbaren Wellenlängenbereich.

Bei dem Strahlungsdetektor handelt es sich beispielsweise um einen Detektor, der unterschiedliche Teilbereiche aufweist, die geeignet sind rote, grüne oder blaue Strahlung zu detektieren, also sogenannte rote, grüne und blaue Pixel. Dabei ist vorzugsweise jeder Pixel mit einem eigenen Filter entsprechend der jeweiligen Farbe Rot, Grün oder Blau ausgestattet.

Die zweite Lichtquelle ist zur Erzeugung von monochromer Strahlung im sichtbaren Spektralbereich geeignet..

Zum Vergleich des Wellenlängenspektrums der Mischstrahlung mit der spektralen Empfindlichkeitsverteilung des Strahlungsdetektors sind das Wellenlängenspektrum und die spektrale Empfindlichkeitsverteilung vorzugsweise jeweils normiert. Dazu ist beispielsweise jeweils der Maximalwert des jeweiligen Spektrums auf 1 normiert. Alternativ kann das Wellenlängenspektrum der Mischstrahlung entsprechend der spektralen Empfindlichkeitsverteilung des Strahlungsdetektors eingestellt sein.

Durch die Normierung oder Einstellung können mit Vorteil die Verläufe des Wellenlängenspektrums und der spektralen Empfindlichkeitsverteilung verglichen werden.

Insbesondere beschränkt sich dabei die Betrachtung der jeweiligen Spektren vorzugsweise auf den sichtbaren Spektralbereich.

Sofern nichts anderes angegeben ist, bezieht sich die vorliegende Beschreibung jeweils auf die normierte beziehungsweise eingestellte spektrale Empfindlichkeitsverteilung beziehungsweise Wellenlängenspektrum.

Für eine gute Anpassung ist es als ausreichend anzusehen, dass das Wellenlängenspektrum weitergehend der spektralen Empfindlichkeitsverteilung entspricht. Eine vollständige Übereinstimmung des Wellenlängenspektrums und der Empfindlichkeitsverteilung ist nicht zwingend notwendig. Es soll vielmehr eine möglichst gute Anpassung an die Empfindlichkeitsverteilung erreicht sein.

Insbesondere ist das Wellenlängenspektrum der Mischstrahlung an den optischen Filter des Detektors angepasst. Handelt es sich bei dem Detektor beispielsweise um einen Chip, der rote, grüne und blaue Pixel aufweist, wobei jeder Pixel mit einem eigenen Filter entsprechend der jeweiligen Farbe Rot, Grün oder Blau ausgestattet ist, so ist das Wellenlängenspektrum der Mischstrahlung vorzugsweise an die Transmissionscharakteristik der einzelnen Filter angepasst. Gleichzeitig kann mit Vorteil ein kontinuierliches Weißspektrum der Mischstrahlung bereitgestellt werden.

Das Beleuchtungsgerät umfasst zumindest zwei Lichtquellen, die Strahlung in unterschiedlichen Farborten emittieren. Im Betrieb des Beleuchtungsgeräts überlagern sich die unterschiedlichen Strahlungen zu einer Mischstrahlung, die ein Wellenlängenspektrum aufweist. Abhängig von der Intensität, mit der die Lichtquellen ihre Strahlung emittieren, lässt sich insbesondere der Verlauf des Wellenlängenspektrums der Mischstrahlung einstellen.

Die Intensität der jeweils von den Lichtquellen emittierten Strahlung kann dabei beispielsweise mittels der Stärke des Stroms, mit dem diese Lichtquelle bestromt wird, eingestellt sein. Je größer dabei die Stromstärke ist, desto höher ist die Intensität der abgestrahlten Strahlung.

Alternativ kann die Intensität der jeweils von den Lichtquellen emittierten Strahlung mittels Pulsweitenmodulation eingestellt sein.

Das Wellenlängenspektrum der Mischstrahlung ist vorzugsweise mittels eines Steuermittels an die spektrale Empfindlichkeitsverteilung des Strahlungsdetektors angepasst. Insbesondere weist der Strahlungsdetektor im Betrieb eine spektrale Empfindlichkeitsverteilung auf. Das Steuermittel verarbeitet die Werte vom Detektor, insbesondere die spektrale Empfindlichkeitsverteilung, und stellt im Betrieb ein Wellenlängenspektrum der von den Lichtquellen emittierten Mischstrahlung so ein, dass diese an die spektrale Empfindlichkeitsverteilung des Strahlungsdetektors angepasst ist. Bei dem Steuermittel handelt es sich beispielsweise um einen Mikrocontroller.

Dabei ist mit Vorteil eine einmalige Einstellung ausreichend. Ist das Wellenlängenspektrum der von den Lichtquellen emittierten Mischstrahlung mittels des Steuermittels einmal an die spektrale Empfindlichkeitsverteilung des Strahlungsdetektors angepasst, ist eine weitere Anpassung, wie es beispielsweise bei herkömmlichen Beleuchtungsgeräten notwendig ist, die die Strahlung der Lichtquelle jeweils an das Umgebungslicht anpassen, nicht notwendig.

Durch ein Beleuchtungsgerät, bei dem das Wellenlängenspektrum der Mischstrahlung an die spektrale Empfindlichkeitsverteilung des Strahlungsdetektors angepasst ist, verbessert sich mit Vorteil die Effizienz des Beleuchtungsgeräts. Insbesondere kann so eine effiziente Ausleuchtung des Strahlungsdetektors mittels der Lichtquellen erzielt werden.

Gemäß zumindest einer Ausführungsform des optischen Beleuchtungsgeräts weist das Wellenlängenspektrum der Mischstrahlung im sichtbaren Spektralbereich ein quasi-kontinuierliches oder kontinuierliches Spektrum auf.

Ein kontinuierliches Spektrum folgt teilweise dem Spektrum eines schwarzen Körpers. Ein quasi-kontinuierliches Spektrum ist insbesondere dem Spektrum eines schwarzen Körpers ähnlich, weist demnach lediglich geringe Abweichungen von dem Spektrum eines schwarzen Körpers auf.

Durch ein kontinuierliches oder ein quasi-kontinuierliches Spektrum der Mischstrahlung kann mit Vorteil eine effiziente Ausleuchtung des Strahlungsdetektors erfolgen. Insbesondere kann so das Wellenlängenspektrum der Mischstrahlung verbessert an die spektrale Empfindlichkeitsverteilung des Strahlungsdetektors angepasst sein.

Vorzugsweise weist das Wellenlängenspektrum der Mischstrahlung im sichtbaren Spektralbereich keine Lücken auf. Unter Lücken sind beispielsweise starke Intensitätsschwankungen, beispielsweise Intensitätsabfälle, in einem oder mehreren Wellenlängenbereichen des Wellenlängenspektrums zu verstehen.

Bevorzugt ist das Wellenlängenspektrum der Mischstrahlung an die Farbwiedergabe des Detektors angepasst. Besonders bevorzugt ist das Wellenlängenspektrum der Mischstrahlung an die Farbwiedergabe und an den Verlauf der spektralen Empfindlichkeitsverteilung des Strahlungsdetektors angepasst. Für eine Anpassung der Farbwiedergabe ist insbesondere ein kontinuierliches Spektrum der Mischstrahlung von Vorteil. Die Anpassung des Verlaufs des Wellenlängenspektrums kann beispielsweise mittels einer Intensitätseinstellung der zweiten Lichtquelle, die monochrome Strahlung emittiert, erfolgen.

Gemäß zumindest einer Ausführungsform des optischen Beleuchtungsgeräts ist die erste Lichtquelle ein Leuchtdiodenchip. Der Leuchtdiodenchip ist geeignet, weiße Strahlung zu erzeugen. Beispielsweise weist die erste Lichtquelle einen Leuchtdiodenchip auf, der eine Halbleiterschichtenfolge und eine darauf angeordnete Konversionsschicht aufweist, wobei die Halbleiterschichtenfolge geeignet ist, Strahlung im blauen Spektralbereich zu emittieren, und die Konversionsschicht dazu geeignet ist, Strahlung im blauen Spektralbereich derart zu konvertieren, dass mittels Überlagerung weiße Strahlung entsteht. Beispielsweise konvertiert die Konversionsschicht die von der Halbleiterschichtenfolge emittierte blaue Strahlung in gelbe Strahlung. Die konvertierte Strahlung ist dabei nicht auf gelbe Strahlung eingeschränkt. Ebenfalls denkbar ist eine Konversionsschicht, die geeignet ist, von der Halbleiterschichtenfolge emittierte Strahlung in grüne Strahlung oder rote Strahlung zu konvertieren.

Alternativ kann die erste Lichtquelle eine Xenonlampe sein.

Gemäß zumindest einer Ausführungsform des optischen Beleuchtungsgeräts ist die zweite Lichtquelle ein Leuchtdiodenchip, der monochrome Strahlung im roten Spektralbereich emittiert.

Ebenfalls denkbar sind als zweite Lichtquelle Leuchtdiodenchips, die beispielsweise monochrome Strahlung im grünen oder blauen Spektralbereich emittieren. Die Wahl des Farbbereichs der von der zweiten Lichtquelle emittierten Strahlung hängt insbesondere von der Filtercharakteristik des Strahlungsdetektors ab.

Die Mischstrahlung entsteht beispielsweise aus einer Überlagerung von weißer und roter Strahlung. Abhängig von der Intensität, mit der die erste Lichtquelle und/oder die zweite Lichtquelle ihre Strahlung emittieren, lässt sich so das Wellenlängenspektrum einstellen, insbesondere an die spektrale Empfindlichkeitsverteilung des Strahlungsdetektors anpassen. Weist die spektrale Empfindlichkeitsverteilung des Strahlungsdetektors beispielsweise einen hohen Rotanteil auf, so kann durch eine hohe Stromstärke der zweiten Lichtquelle, die geeignet ist, Strahlung im roten Spektralbereich zu emittieren, die Intensität der roten Strahlung und damit der Rotanteil der Mischstrahlung erhöht sein.

Insbesondere kann in diesem Fall ein bestimmter Anteil von roter Strahlung der Mischstrahlung beigemengt sein. Durch eine gezielte Hinzugabe von roter Strahlung mittels Bestromung der zweiten Lichtquelle für eine vorgegebene Zeitspanne mit einer vorgegebenen Stromstärke kann insbesondere ein Mangel an roter Strahlung der Mischstrahlung ausgeglichen sein. Insgesamt kann so das Wellenlängenspektrum der Mischstrahlung vorteilhaft an die spektrale Empfindlichkeitsverteilung des Strahlungsdetektors angepasst sein.

Es weicht das Wellenlängenspektrum im Mittel um höchstens 40 % von der spektralen Empfindlichkeitsverteilung ab. Bevorzugt weicht das Wellenlängenspektrum im Mittel um höchstens 20 %. Idealerweise ist das Wellenlängenspektrum der Mischstrahlung derart eingestellt, dass sie im Rahmen der Fehlertoleranzen von Strahlungsdetektor, erster Lichtquelle und zweiter Lichtquelle gleich der spektralen Empfindlichkeitsverteilung des Strahlungsdetektors ist. Vorzugsweise werden hierbei die normierten Spektren des Wellenlängenspektrums und der Empfindlichkeitsverteilung betrachtet.

Gemäß zumindest einer Ausführungsform des optischen Beleuchtungsgeräts ist die Fläche unter der Kurve des Wellenlängenspektrums der Mischstrahlung an die Fläche unter der Kurve der Empfindlichkeitsverteilung des Detektors angepasst. Je mehr Fläche unter der Kurve des Wellenlängenspektrums der Mischstrahlung sich mit der Kurve der Empfindlichkeitsverteilung des Detektors deckt, desto höher ist mit Vorteil die Effizienz hinsichtlich Ausleuchtung des Strahlungsdetektors.

Gemäß zumindest einer Ausführungsform des optischen Beleuchtungsgeräts weist das Beleuchtungsgerät weiter eine dritte Lichtquelle zur Erzeugung von monochromer Strahlung im sichtbaren Spektralbereich auf, wobei die monochrome Strahlung der dritten Lichtquelle von der monochromen Strahlung der zweiten Lichtquelle verschieden ist.

Beispielsweise sind die zweite Lichtquelle zur Erzeugung von roter Strahlung und die dritte Lichtquelle zur Erzeugung von grüner Strahlung geeignet.

Gemäß zumindest einer Ausführungsform des optischen Beleuchtungsgeräts weist das Beleuchtungsgerät weiter eine vierte Lichtquelle zur Erzeugung von monochromer Strahlung im sichtbaren Spektralbereich auf, wobei die monochrome Strahlung der vierten Lichtquelle von der monochromen Strahlung der dritten Lichtquelle und von der monochromen Strahlung der zweiten Lichtquelle verschieden ist.

Beispielsweise ist die erste Lichtquelle ein erster Leuchtdiodenchip, der weiße Strahlung emittiert, die zweite Lichtquelle ein zweiter Leuchtdiodenchip, der Strahlung im roten Spektralbereich emittiert, die dritte Lichtquelle ein dritter Leuchtdiodenchip, der Strahlung im grünen Spektralbereich emittiert und die vierte Lichtquelle ein vierter Leuchtdiodenchip, der Strahlung im blauen Spektralbereich emittiert.

Das optische Beleuchtungsgerät weist in diesem Fall somit einen weißen Leuchtdiodenchip und RGB-LEDs auf. Die von den einzelnen Leuchtdiodenchips emittierte Strahlung überlagert sich insgesamt zu einer Mischstrahlung aufweisend ein Wellenlängenspektrum.

Durch die RGB-LEDs kann je nach Bestromung der einzelnen RGB-LEDs das Wellenlängenspektrum in verschiedenen Spektralbereichen verändert, insbesondere eingestellt sein. Weist die spektrale Empfindlichkeitsverteilung des Strahlungsdetektors beispielsweise eine hohe Intensität im roten Spektralbereich, jedoch eine niedrige Intensität im grünen Spektralbereich auf, so kann durch eine hohe Stromstärke, mit der der rote Leuchtdiodenchip bestromt wird, und mit einer niedrigen Stromstärke, mit der der grüne Leuchtdiodenchip bestromt wird, das Wellenlängenspektrum der Mischstrahlung an die spektrale Empfindlichkeitsverteilung des Strahlungsdetektors angepasst sein.

Es ist die spektrale Empfindlichkeitsverteilung des Strahlungsdetektors an die spektrale Empfindlichkeitsverteilung des menschlichen Auges angepasst.

Für eine gute Anpassung ist es als ausreichend anzusehen, dass die spektrale Empfindlichkeitsverteilung des Strahlungsdetektors weitergehend der spektralen Empfindlichkeitsverteilung des menschlichen Auges entspricht. Eine vollständige Übereinstimmung der spektralen Empfindlichkeitsverteilungen ist nicht zwingend notwendig.

Zum Vergleich der spektralen Empfindlichkeitsverteilung des Strahlungsdetektors mit der spektralen Empfindlichkeitsverteilung des menschlichen Auges ist es zweckmäßig, beide Empfindlichkeitsverteilungen so anzupassen, dass diese normiert sind.

Die spektrale Empfindlichkeitsverteilung des hell adaptierten menschlichen Auges weist insbesondere ein Maximum der Empfindlichkeit bei etwa λ = 555 nm auf. Das Empfindlichkeitsmaximum des dunkel adaptierten Auges liegt ungefähr bei λ = 500 nm. Der Strahlungsdetektor ist somit insbesondere zur Detektion von Strahlung gemäß der Empfindlichkeit des menschlichen Auges ausgebildet, das ein Empfindlichkeitsmaximum bei ungefähr λ = 555 nm (hell adaptiert, Tagsehen) oder bei ungefähr λ = 500 nm (dunkel adaptiert, Nachtsehen) besitzt. Derartige Strahlungsdetektoren sind beispielsweise aus der Druckschrift DE 10 2004 037 020 A1 und aus der Druckschrift DE 10 245 410 A1 bekannt.

Es wird ferner ein optisches Aufzeichnungsgerät mit einem der hier beschriebenen optischen Beleuchtungsgeräte angegeben. Das optische Beleuchtungsgerät des Aufzeichnungsgeräts ist dabei so ausgebildet, wie es in Verbindung mit einer der oben beschriebenen Ausführungsformen offenbart ist. Das heißt, sämtliche in Verbindung mit dem optischen Beleuchtungsgerät offenbarten Merkmale sind auch für das Beleuchtungsgerät des Aufzeichnungsgeräts offenbart und umgekehrt.

Gemäß zumindest einer Ausführungsform des optischen Aufzeichnungsgeräts handelt es sich bei dem optischen Aufzeichnungsgerät um eines der folgenden Geräte: Mobiltelefon, Fotoapparat, Videokamera.

Gemäß zumindest einer Ausführungsform des optischen Aufzeichnungsgeräts ist die erste Lichtquelle ein Blitzlicht. Die erste Leuchtdiode ist demnach geeignet, Blitzlicht mit einer bestimmten Beleuchtungsdauer zu erzeugen. Bevorzugt ist im optischen Aufzeichnungsgerät eine Vorrichtung vorgesehen, die geeignet ist, die erste Leuchtdiode für diese Zeitspannen zu bestromen. Bei der Vorrichtung kann es sich beispielsweise um eine Pulsweitenmodulationsschaltung handeln.

Alternativ kann die erste Leuchtdiode als Dauerbeleuchtung dienen, beispielsweise als Beleuchtung einer Videokamera. Dabei können die Lichtquellen beispielsweise mittels Pulsweitenmodulation derart einstellbar sein, dass die Lichtquellen lediglich bei Aufnahme Strahlung emittieren.

Gemäß zumindest einer Ausführungsform des optischen Aufzeichnungsgeräts dient die zweite Lichtquelle als Beleuchtung für eine Autofokus-Einrichtung. Die zweite Lichtquelle wird demnach zusätzlich genutzt, um eine Optik so einzustellen, dass ein scharfes Bild eines Objekts aufgenommen werden kann.

Es ist die zweite Lichtquelle als Aufnahmeindikator eingerichtet. Aufnahmeindikatoren sind unter anderem auch bekannt unter dem Begriff "Privacy Light". Dieses wird insbesondere dazu benutzt, einem Gegenüber zu signalisieren, dass er aufgenommen wird.

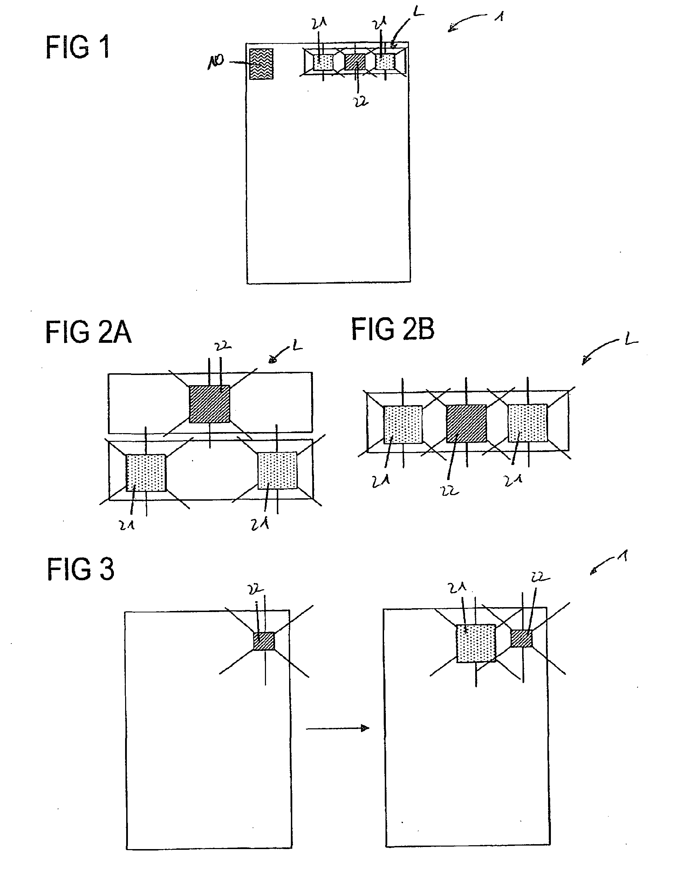

Gemäß zumindest einer Ausführungsform des optischen Aufzeichnungsgeräts ist die zweite Lichtquelle ein Vorblitz, der den Rote-Augen-Effekt reduziert. Die zweite Lichtquelle wird also als Vorblitz eingesetzt, um den Rote-Augen-Effekt beim Fotografieren zu reduzieren. Bevorzugt ist die zweite Lichtquelle geeignet, in diesem Fall Strahlung im roten Spektralbereich zu emittieren. Die zweite Lichtquelle kann so als besonders augenschonender Vorblitz Verwendung finden. Weitere Merkmale, Vorteile, bevorzugte Ausgestaltungen und Zweckmäßigkeiten des optischen Beleuchtungsgeräts und des optischen Aufzeichnungsgeräts ergeben sich aus den im Folgenden in Verbindung mit den Figuren 1 bis 5 erläuterten Ausführungsbeispielen.

Es zeigen:
- Figur 1: eine schematische Ansicht eines Ausführungsbeispiels eines erfindungsgemäßen optischen Aufzeichnungsgeräts mit einem erfindungsgemäßen Beleuchtungsgerät,
- Figuren 2A, 2B: jeweils eine schematische Ansicht eines Ausführungsbeispiels eines Ausschnitts eines erfindungsgemäßen optischen Beleuchtungsgeräts, und
- Figuren 3 bis 5: jeweils eine schematische Ansicht weiterer Ausführungsbeispiele eines erfindungsgemäßen optischen Aufzeichnungsgeräts mit einem erfindungsgemäßen Beleuchtungsgerät.

Gleiche oder gleich wirkende Bestandteile sind jeweils mit den gleichen Bezugszeichen versehen. Die dargestellten Bestandteile sowie die Größenverhältnisse der Bestandteile untereinander sind nicht als maßstabsgerecht anzusehen.

In Figur 1 ist eine schematische Ansicht eines optischen Aufzeichnungsgeräts dargestellt, das ein optisches Beleuchtungsgerät 1 mit einem Strahlungsdetektor 10 aufweist. Der Strahlungsdetektor 10 umfasst insbesondere einen Halbleiterchip und einen optischen Filter und weist eine spektrale Empfindlichkeitsverteilung auf.

Es ist die spektrale Empfindlichkeitsverteilung des Strahlungsdetektors 10 an die spektrale Empfindlichkeitsverteilung des menschlichen Auges angepasst. Insbesondere ist die spektrale Empfindlichkeitsverteilung des Strahlungsdetektors 10 an das hell adaptierte menschliche Auge oder das dunkel adaptierte menschliche Auge angepasst.

Vorzugsweise weist das optische Aufzeichnungsgerät einen Bereich L auf, in dem Lichtquellen 21, 22 zur Beleuchtung angeordnet sind. In dem Ausführungsbeispiel der Figur 1 sind insbesondere zwei erste Lichtquellen 21 zur Erzeugung von weißer Strahlung und eine zweite Lichtquelle 22 zur Erzeugung von monochromer Strahlung im sichtbaren Spektralbereich angeordnet. Bevorzugt ist die zweite Lichtquelle 22 zwischen den ersten Lichtquellen 21 angeordnet.

Im Betrieb des optischen Aufzeichnungsgeräts überlagern sich die von den ersten Lichtquellen 21 emittierte Strahlung und die von der zweiten Lichtquelle 22 emittierte Strahlung zu einer Mischstrahlung, die ein Wellenlängenspektrum aufweist.

Es ist das Wellenlängenspektrum der Mischstrahlung an die spektrale Empfindlichkeitsverteilung des Strahlungsdetektors 10 angepasst. Hier sind zum Vergleich das Wellenlängenspektrum der Mischstrahlung und der spektralen Empfindlichkeitsverteilung des Strahlungsdetektors 10 vorzugsweise normiert.

Es weicht das Wellenlängenspektrum im Mittel um höchstens 40 % von der spektralen Empfindlichkeitsverteilung ab. Besonders bevorzugt weicht das Wellenlängenspektrum im Mittel um höchstens 20 %.

Dadurch, dass das Wellenlängenspektrum der Mischstrahlung an die spektrale Empfindlichkeitsverteilung des Strahlungsdetektors 10 angepasst ist, kann mit Vorteil eine effiziente Ausleuchtung des Strahlungsdetektors 10 durch die ersten und zweiten Lichtquellen 21, 22 erfolgen. Ein effizientes Beleuchtungsgerät 1, und somit ein effizientes Aufzeichnungsgerät, kann so mit Vorteil erzielt werden.

Bevorzugt weist das Wellenlängenspektrum der Mischstrahlung im sichtbaren Spektralbereich ein quasi-kontinuierliches oder kontinuierliches Spektrum auf. Dadurch kann mit Vorteil eine verbesserte, insbesondere effiziente Ausleuchtung des Strahlungsdetektors 10 erzielt werden.

Bevorzugt sind die ersten Lichtquellen 21 ein Leuchtdiodenchip oder eine Xenonlampe. Beispielsweise sind die ersten Lichtquellen 21 jeweils ein Leuchtdiodenchip aufweisend eine Halbleiterschichtenfolge, die Strahlung im blauen Spektralbereich emittiert, und eine Konversionsschicht oder einen Verguss, der einen Konversionsstoff aufweist, und Strahlung im blauen Spektralbereich konvertiert, beispielsweise in Strahlung im gelben Spektralbereich. So kann ein weißer LED-Chip erzielt werden.

Vorzugsweise ist die zweite Lichtquelle 22 ein Leuchtdiodenchip, der monochrome Strahlung im roten Spektralbereich emittiert. Dadurch kann insbesondere ein bestimmter Anteil von roter Strahlung der weißen Strahlung der ersten Lichtquellen 21 beigemengt sein. Durch eine gezielte Hinzugabe von roter Strahlung kann insbesondere ein Mangel an roter Strahlung der ersten Lichtquellen 21 ausgeglichen sein. Insgesamt ist so das Wellenlängenspektrum der Mischstrahlung vorteilhaft an die spektrale Empfindlichkeitsverteilung des Strahlungsdetektors 10 angepasst.

Insbesondere lässt sich das Wellenlängenspektrum der Mischstrahlung abhängig von der Intensität, mit der die einzelnen Lichtquellen 21, 22 ihre Strahlung emittieren, einstellen. Die Intensität der von einer der Lichtquellen 21, 22 emittierten Strahlung kann dabei beispielsweise mittels der Stärke des Stroms, mit dem diese Lichtquelle 21, 22 bestromt wird, eingestellt sein. Je größer dabei die Stromstärke ist, desto höher ist die Intensität der abgestrahlten Strahlung.

Das optische Aufzeichnungsgerät der Figur 1 ist beispielsweise ein Fotoapparat oder ein Mobiltelefon. Bevorzugt sind in diesem Fall die ersten Lichtquellen 21 jeweils ein Blitzlicht. Die zweite Lichtquelle 22 ist dabei zwischen den zwei Blitzlichtern angeordnet. Es ist die zweite Lichtquelle 22 als Aufnahmeindikator eingerichtet, also als so genanntes "Privacy Light". Dieses "Privacy Light" ist so ausgelegt, dass es beim Blitzbetrieb des Aufzeichnungsgeräts hinzugeschaltet wird. Damit kann mit Vorteil ein dem Blitzlicht fehlender Rotanteil von dem "Privacy Light" geliefert werden, sodass das Wellenlängenspektrum der Mischstrahlung an die spektrale Empfindlichkeitsverteilung des Strahlungsdetektors 10 angepasst ist.

Alternativ kann das optische Aufzeichnungsgerät eine Videokamera sein. In diesem Fall ist die zweite Lichtquelle 22 als Aufnahmeindikator eingerichtet, das so genannte "Video Light". Das "Video Light" ist ein permanentes oder blinkendes Licht, das den Betrieb des Aufzeichnungsgeräts beziehungsweise der Videokamera zeigt.

In den Figuren 2A und 2B sind spezielle Anordnungen der ersten und zweiten Lichtquelle 21, 22 zueinander dargestellt. Insbesondere zeigen die Figuren 2A und 2B Ausführungsbeispiele von Lichtanordnungen im Bereich L, die beispielsweise in einem Aufzeichnungsgerät aus Figur 1 Verwendung finden können.

In Figur 2A sind nebeneinander zwei erste Lichtquellen 21 angeordnet, die insbesondere zur Erzeugung von weißem Licht geeignet sind. Bevorzugt sind die ersten Lichtquellen 21 LED-Chips. Ferner ist vertikal oberhalb der ersten Lichtquellen 21 eine zweite Lichtquelle 22 angeordnet, die insbesondere Strahlung im roten Spektralbereich emittiert. Die zweite Lichtquelle 22 ist beispielsweise zwischen den ersten Lichtquellen 21, jedoch vertikal oberhalb den ersten Lichtquellen 21 angeordnet.

In Figur 2B ist ein weiteres Ausführungsbeispiel einer Anordnung der ersten und zweiten Lichtquellen 21, 22 zueinander gezeigt. Im Unterschied zu dem in Figur 2A dargestellten Ausführungsbeispiel ist die zweite Lichtquelle 22 direkt zwischen den ersten Lichtquellen 21 angeordnet. Ein vertikaler Abstand zwischen ersten Lichtquellen 21 und zweiter Lichtquelle 22 besteht in diesem Fall,nicht.

Es ist die zweite Lichtquelle 22 als Aufnahmeindikator eingerichtet.

In den Ausführungsbeispielen der Figuren 2A und 2B sind die ersten Lichtquellen 21 jeweils ein Blitzlicht.

In dem Ausführungsbeispiel der Figur 3 ist ein weiteres Aufzeichnungsgerät dargestellt. Im Unterschied zu dem in Figur 1 dargestellten Ausführungsbeispiel weist das in Figur 3 dargestellte Ausführungsbeispiel lediglich eine erste Lichtquelle 21 auf. Der Strahlungsdetektor 10 ist in dem Ausführungsbeispiel 3 der Übersicht halber nicht dargestellt.

Im Ausführungsbeispiel der Figur 3 dient die zweite Lichtquelle 22 auch als Beleuchtung für eine Autofokus-Einrichtung. Wie in Figur 3 dargestellt kann zu der zweiten Lichtquelle 22 die erste Lichtquelle 21 zugeschaltet werden. Die erste Lichtquelle 21 ist insbesondere ein Blitzlicht oder ein Licht zur Beleuchtung von Videoaufnahmen.

Das Aufzeichnungsgerät weist somit eine weiße LED als Blitzlicht und eine extra rote LED als Beleuchtung auch für eine Autofokus-Einrichtung auf. Die rote LED kann dabei so ausgelegt sein, dass sie im Blitzlichtbetrieb zusätzlich zur weißen Strahlung der ersten Lichtquelle 21 einen Rotanteil liefert. Die daraus resultierende Mischstrahlung ist an die spektrale Empfindlichkeitsverteilung des Strahlungsdetektors angepasst.

Im Übrigen stimmt das Ausführungsbeispiel der Figur 3 mit dem Ausführungsbeispiel der Figur 1 überein.

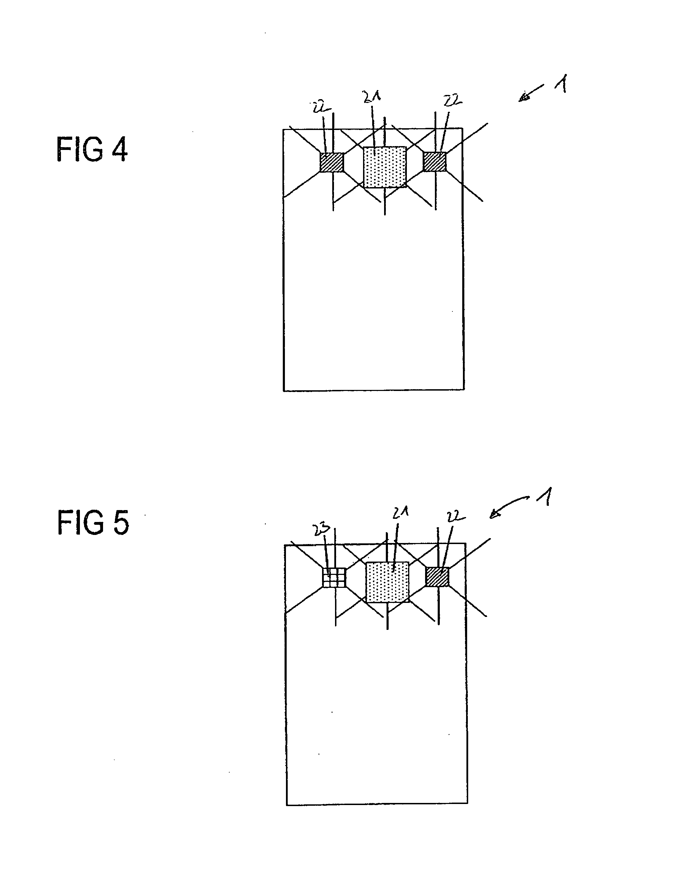

In Figur 4 ist ein weiteres Ausführungsbeispiel eines optischen Aufzeichnungsgeräts dargestellt. Im Unterschied zu dem in Figur 3 dargestellten Ausführungsbeispiel weist das Aufzeichnungsgerät der Figur 4 zwei zweite Lichtquellen 22 auf. Die erste Lichtquelle 21 ist dabei insbesondere zwischen den zwei zweiten Lichtquellen 22 angeordnet.

Die erste Lichtquelle 21 ist vorzugsweise ein Blitzlicht. Die zweiten Lichtquellen 22 emittieren vorzugsweise Strahlung im roten Spektralbereich. Es sind die zweiten Lichtquellen 22 als Aufnahmeindikator ausgebildet.

In dem Ausführungsbeispiel der Figur 4 sind demnach mehrere farbige LEDs, insbesondere rote LEDs, dem Blitzlicht hinzugefügt. Dadurch kann die Effizienz, insbesondere die Ausleuchtung des Strahlungsdetektors, mit Vorteil verbessert werden. Es ist so das Wellenlängenspektrum der Mischstrahlung bestehend aus weißer Strahlung der ersten Lichtquelle 21 und roten Strahlungen der zwei zweiten Lichtquellen 22 an die spektrale Empfindlichkeitsverteilung des Strahlungsdetektors verbessert angepasst.

Das Ausführungsbeispiel der Figur 5 unterscheidet sich von dem Ausführungsbeispiel der Figur 4 dadurch, dass das Aufzeichnungsgerät eine dritte Lichtquelle 23 zur Erzeugung von monochromer Strahlung im sichtbaren Spektralbereich aufweist, wobei die monochrome Strahlung der dritten Lichtquelle von der monochromen Strahlung der zweiten Lichtquelle verschieden ist. Insbesondere weist das Ausführungsbeispiel der Figur 5 lediglich eine zweite Lichtquelle 22 auf.

Bevorzugt emittiert die zweite Lichtquelle 22 rote Strahlung und die dritte Lichtquelle 23 grüne Strahlung. Insbesondere können so mehrere beliebig farbige LEDs zu der ersten Lichtquelle 21, insbesondere dem Blitzlicht, hinzugefügt werden. Dadurch kann das Wellenlängenspektrum der Mischstrahlung der einzelnen Lichtquellen 21, 22, 23 mittels Bestromung der einzelnen Lichtquellen 21, 22, 23 in verschiedenen Spektralbereichen an die spektrale Empfindlichkeitsverteilung und/oder an die Farbwiedergabe des Strahlungsdetektors angepasst sein.

Das optische Beleuchtungsgerät 1 kann ferner eine vierte Lichtquelle zur Erzeugung von monochromer Strahlung im sichtbaren Spektralbereich aufweisen (nicht dargestellt). Bevorzugt ist in diesem Fall die erste Lichtquelle ein erster Leuchtdiodenchip, der weiße Strahlung emittiert, die zweite Lichtquelle ein zweiter Leuchtdiodenchip, der Strahlung im roten Spektralbereich emittiert, die dritte Lichtquelle ein dritter Leuchtdiodenchip, der Strahlung im grünen Spektralbereich emittiert und die vierte Lichtquelle ein vierter Leuchtdiodenchip, der Strahlung im blauen Spektralbereich emittiert.

Das optische Beleuchtungsgerät 1 weist in diesem Fall somit einen weißen Leuchtdiodenchip 21 und RGB-LEDs auf. Durch die RGB-LEDs kann je nach Bestromung der einzelnen RGB-LEDs das Wellenlängenspektrum der Mischstrahlung in den einzelnen monochromen Spektralbereichen verändert, insbesondere eingestellt und angepasst sein. Weist die spektrale Empfindlichkeitsverteilung des Strahlungsdetektors beispielsweise hohe Intensitäten im roten Spektralbereich, jedoch niedrige Intensitäten im blauen Spektralbereich auf, so kann durch eine hohe Stromstärke des roten LED-Chips und durch eine niedrige Stromstärke des blauen LED-Chips das Wellenlängenspektrum der Mischstrahlung an die spektrale Empfindlichkeitsverteilung angepasst sein.

## Patentansprüche

1. Optisches Beleuchtungsgerät (1) mit
- einem Strahlungsdetektor (10), der einen Halbleiterchip und einen optischen Filter umfasst, und eine spektrale Empfindlichkeitsverteilung aufweist,
- einer ersten Lichtquelle (21) zur Erzeugung von weißer Strahlung, und
- einer zweiten Lichtquelle (22) zur Erzeugung von monochromer Strahlung im sichtbaren Spektralbereich, wobei sich die von der ersten Lichtquelle (21) emittierte Strahlung und die von der zweiten Lichtquelle (22) emittierte Strahlung zu einer Mischstrahlung überlagern, die ein Wellenlängenspektrum aufweist, und wobei
- das Wellenlängenspektrum der Mischstrahlung an die spektrale Empfindlichkeitsverteilung des Strahlungsdetektors (10) angepasst ist, sodass das Wellenlängenspektrum der Mischstrahlung im Mittel um höchstens 40 % von der spektralen Empfindlichkeitsverteilung des Strahlungsdetektors (10) abweicht, und
- die spektrale Empfindlichkeitsverteilung des Strahlungsdetektors (10) an die spektrale Empfindlichkeitsverteilung des menschlichen Auges angepasst ist,
**dadurch gekennzeichnet, dass**
die zweite Lichtquelle als ein Aufnahmeindikator eingerichtet ist.

2. Optisches Beleuchtungsgerät nach Anspruch 1, wobei der Verlauf und die Farbwiedergabe des Wellenlängenspektrums der Mischstrahlung an den Verlauf und an die Farbwiedergabe der spektralen Empfindlichkeitsverteilung des Strahlungsdetektors (10) angepasst ist.

3. Optisches Beleuchtungsgerät nach Anspruch 1 oder 2, wobei das Wellenlängenspektrum der Mischstrahlung im sichtbaren Spektralbereich ein kontinuierliches Spektrum aufweist.

4. Optisches Beleuchtungsgerät nach einem der vorhergehenden Ansprüche, wobei
die erste Lichtquelle (21) ein Leuchtdiodenchip ist.

5. Optisches Beleuchtungsgerät nach einem der vorhergehenden Ansprüche, wobei
die zweite Lichtquelle (22) ein Leuchtdiodenchip ist, der monochrome Strahlung im roten Spektralbereich emittiert.

6. Optisches Beleuchtungsgerät nach einem der vorhergehenden Ansprüche, mit
einer dritten Lichtquelle (23) zur Erzeugung von monochromer Strahlung im sichtbaren Spektralbereich, wobei die monochrome Strahlung der dritten Lichtquelle (23) von der monochromen Strahlung der zweiten Lichtquelle (22) verschieden ist.

7. Optisches Beleuchtungsgerät nach Anspruch 6, mit einer vierten Lichtquelle zur Erzeugung von monochromer Strahlung im sichtbaren Spektralbereich, wobei die monochrome Strahlung der vierten Lichtquelle von der monochromen Strahlung der dritten Lichtquelle (23) und von der monochromen Strahlung der zweiten Lichtquelle (22) verschieden ist.

8. Optisches Beleuchtungsgerät nach Anspruch 7, wobei die erste Lichtquelle (21) ein erster Leuchtdiodenchip ist, der weiße Strahlung emittiert, die zweite Lichtquelle (22) ein zweiter Leuchtdiodenchip ist, der Strahlung im roten Spektralbereich emittiert, die dritte Lichtquelle (23) ein dritter Leuchtdiodenchip ist, der Strahlung im grünen Spektralbereich emittiert, und die vierte Lichtquelle ein vierter Leuchtdiodenchip ist, der Strahlung im blauen Spektralbereich emittiert.

9. Optisches Beleuchtungsgerät nach zumindest den Ansprüchen 4 und 5,
das genau zwei erste Lichtquellen (21) zur Erzeugung von weißer Strahlung und genau eine zweite Lichtquelle (22) aufweist,
wobei die zweite Lichtquelle (22) zwischen den zwei ersten Lichtquellen (21) angeordnet ist.

10. Optisches Aufzeichnungsgerät mit einem optischen Beleuchtungsgerät (1) nach einem der vorhergehenden Ansprüche 1 bis 9.

11. Optisches Aufzeichnungsgerät nach Anspruch 10,
bei dem das optische Aufzeichnungsgerät eines der folgenden Geräte ist: Mobiltelefon, Fotoapparat, Videokamera.

12. Optisches Aufzeichnungsgerät nach einem der vorhergehenden Ansprüche 10 oder 11, wobei die erste Lichtquelle (21) ein Blitzlicht ist.

13. Optisches Aufzeichnungsgerät nach einem der vorhergehenden Ansprüche 10 bis 12, wobei
die zweite Lichtquelle (22) als Beleuchtung für eine Autofokus-Einrichtung dient.

14. Optisches Aufzeichnungsgerät nach einem der vorhergehenden Ansprüche 10 bis 12, wobei die zweite Lichtquelle (22) ein blinkendes Licht ist, das den Betrieb des Aufzeichnungsgeräts zeigt.

15. Optisches Aufzeichnungsgerät nach einem der vorhergehenden Ansprüche 10 bis 12, wobei die zweite Lichtquelle (22) ein Vorblitz ist, der den Rote-Augen-Effekt reduziert.

## Claims

1. Optical lighting device (1) comprising
- a radiation detector (10), which comprises a semiconductor chip and an optical filter and has a spectral sensitivity distribution,
- a first light source (21) for generating white radiation, and
- a second light source (22) for generating monochromatic radiation in the visible spectral range, wherein the radiation emitted by the first light source (21) and the radiation emitted by the second light source (22) are superimposed to form a mixed radiation having a wavelength spectrum, and wherein
- the wavelength spectrum of the mixed radiation is adapted to the spectral sensitivity distribution of the radiation detector (10), such that the wavelength spectrum of the mixed radiation deviates on average by at most 40% from the spectral sensitivity distribution of the radiation detector (10), and
- the spectral sensitivity distribution of the radiation detector (10) is adapted to the spectral sensitivity distribution of the human eye, **characterized in that**
the second light source is designed as a recording indicator.

2. Optical lighting device according to Claim 1, wherein the profile and the colour rendering of the wavelength spectrum of the mixed radiation are adapted to the profile and to the colour rendering of the spectral sensitivity distribution of the radiation detector (10).

3. Optical lighting device according to Claim 1 or 2,
wherein
the wavelength spectrum of the mixed radiation in the visible spectral range has a continuous spectrum.

4. Optical lighting device according to any of the preceding claims, wherein
the first light source (21) is a light-emitting diode chip.

5. Optical lighting device according to any of the preceding claims, wherein
the second light source (22) is a light-emitting diode chip, which emits monochromatic radiation in the red spectral range.

6. Optical lighting device according to any of the preceding claims, comprising
a third light source (23) for generating monochromatic radiation in the visible spectral range, wherein the monochromatic radiation of the third light source (23) is different from the monochromatic radiation of the second light source (22).

7. Optical lighting device according to Claim 6, comprising
a fourth light source for generating monochromatic radiation in the visible spectral range, wherein the monochromatic radiation of the fourth light source is different from the monochromatic radiation of the third light source (23) and from the monochromatic radiation of the second light source (22).

8. Optical lighting device according to Claim 7, wherein the first light source (21) is a first light-emitting diode chip, which emits white radiation, the second light source (22) is a second light-emitting diode chip, which emits radiation in the red spectral range, the third light source (23) is a third light-emitting diode chip, which emits radiation in the green spectral range, and the fourth light source is a fourth light-emitting diode chip, which emits radiation in the blue spectral range.

9. Optical lighting device according to at least Claims 4 and 5,
which comprises exactly two first light sources (21) for generating white radiation and exactly one second light source (22),
wherein the second light source (22) is arranged between the two first light sources (21).

10. Optical recording device comprising an optical lighting device (1) according to any of the preceding Claims 1 to 9.

11. Optical recording device according to Claim 10,
wherein the optical recording device is one of the following devices: mobile telephone, photographic camera, video camera.

12. Optical recording device according to either of the preceding Claims 10 and 11, wherein
the first light source (21) is a flashlight.

13. Optical recording device according to any of the preceding Claims 10 to 12, wherein
the second light source (22) serves as illumination for an autofocus device.

14. Optical recording device according to any of the preceding Claims 10 to 12, wherein
the second light source (22) is a flashing light that shows the operation of the recording device.

15. Optical recording device according to any of the preceding Claims 10 to 12, wherein
the second light source (22) is a pre-flash that reduces the red eye effect.

## Revendications

1. Appareil d'éclairage optique (1) comportant
- un détecteur de rayonnement (10) qui comprend une puce à semiconducteur et un filtre optique, et présente une distribution de sensibilité spectrale,
- une première source lumineuse (21) destinée à générer un rayonnement de lumière blanche, et
- une deuxième source lumineuse (22) destinée à générer un rayonnement monochromatique dans un domaine spectral visible, dans lequel le rayonnement émis par la première source lumineuse (21) et le rayonnement émis par la deuxième source lumineuse (22) se superposent en un rayonnement mélangé qui présente un spectre de longueurs d'onde, et dans lequel
- le spectre de longueurs d'onde du rayonnement mélangé est adapté à la distribution de sensibilité spectrale du détecteur de rayonnement (10) de manière à ce que le spectre de longueurs d'onde du rayonnement mélangé s'écarte en moyenne au plus de 40 % de la distribution de sensibilité spectrale du détecteur de rayonnement (10), et
- la distribution de sensibilité spectrale du détecteur de rayonnement (10) est adaptée à la distribution de sensibilité spectrale de l'oeil humain,
**caractérisé en ce que**
la deuxième source lumineuse est conçue sous la forme d'un indicateur d'enregistrement.

2. Appareil d'éclairage optique selon la revendication 1, dans lequel le profil et la reproduction des couleurs du spectre de longueurs d'onde du rayonnement mixte sont adaptés au profil et à la reproduction des couleurs de la distribution de sensibilité spectrale du détecteur de rayonnement (10).

3. Appareil d'éclairage optique selon la revendication 1 ou 2, dans lequel le spectre de longueurs d'onde du rayonnement mélangé présente un spectre continu dans le domaine spectral visible.

4. Appareil d'éclairage optique selon l'une quelconque des revendications précédentes, dans lequel la première source lumineuse (21) est une puce à diode électroluminescente.

5. Appareil d'éclairage optique selon l'une quelconque des revendications précédentes, dans lequel la deuxième source lumineuse (22) est une puce à diode électroluminescente qui émet le rayonnement monochromatique dans le domaine spectral rouge.

6. Appareil d'éclairage optique selon l'une quelconque des revendications précédentes, comportant une troisième source lumineuse (23) destinée à générer un rayonnement monochromatique dans un domaine spectral visible, dans lequel le rayonnement monochromatique de la troisième source lumineuse (23) est différent du rayonnement monochromatique de la deuxième source lumineuse (22).

7. Appareil d'éclairage optique selon la revendication 6, comportant une quatrième source lumineuse destinée à générer un rayonnement monochromatique dans un domaine spectral visible, dans lequel le rayonnement monochromatique de la quatrième source lumineuse est différent du rayonnement monochromatique de la troisième source lumineuse (23) et du rayonnement monochromatique de la deuxième source lumineuse (22).

8. Appareil d'éclairage optique selon la revendication 7, dans lequel la première source lumineuse (21) est une première puce à diode électroluminescente qui émet un rayonnement blanc, la deuxième source lumineuse (22) est une deuxième puce à diode électroluminescente qui émet un rayonnement dans un domaine spectral rouge, la troisième source lumineuse (23) est une troisième puce à diode électroluminescente qui émet un rayonnement dans un domaine spectral vert, et la quatrième source lumineuse est une quatrième puce à diode électroluminescente qui émet un rayonnement dans un domaine spectral bleu.

9. Appareil d'éclairage optique selon au moins l'une des revendications 4 et 5, qui comporte exactement deux premières sources lumineuses (21) destinées à générer un rayonnement blanc et exactement une deuxième source lumineuse (22), dans lequel la deuxième source lumineuse (22) est disposée entre les deux premières sources lumineuses (21).

10. Appareil d'enregistrement optique comportant un appareil d'éclairage optique (1) selon l'une quelconque des revendications 1 à 9 précédentes.

11. Appareil d'enregistrement optique selon la revendication 10, dans lequel l'appareil d'enregistrement optique est l'un des appareils suivants : un téléphone mobile, un appareil photo, une caméra vidéo.

12. Appareil d'enregistrement optique selon l'une quelconque des revendications 10 ou 11 précédentes, dans lequel la première source lumineuse (21) est un flash.

13. Appareil d'enregistrement optique selon l'une quelconque des revendications 10 à 12 précédentes, dans lequel la deuxième source lumineuse (22) est utilisée en tant qu'éclairage pour un dispositif de mise au point automatique.

14. Appareil d'enregistrement optique selon l'une quelconque des revendications 10 à 12 précédentes, dans lequel la deuxième source lumineuse (22) est une lumière clignotante qui indique le fonctionnement de l'appareil d'enregistrement.

15. Appareil d'enregistrement optique selon l'une quelconque des revendications 10 à 12 précédentes, dans lequel la deuxième source lumineuse (22) est un pré-flash qui réduit l'effet d'yeux rouges.
